# EUROPEAN PATENT APPLICATION

(11) **EP 1 990 380 A1**
(43) Date of publication of application: **12.11.2008**
(21) Application number: 07737520.2
(22) Date of filing: 28.02.2007
(51) Int. Cl.: C09D 11/00, B41J 2/01, B41M 5/00

(54) **PHOTOCURABLE INK COMPOSITION, INKJET RECORDING METHOD, AND INKJET RECORDING APPARATUS**

(30) Priority: 28.02.2006 JP 2006053361; 08.03.2006 JP 2006062783
(71) Applicant: Seiko Epson Corporation, Tokyo 163-0811 (JP)
(72) Inventor: NAKANO, Keitaro, Suwa-shi, Nagano 392-8502 (JP); OYANAGI, Takashi, Suwa-shi, Nagano 392-8502 (JP); TAKEMOTO, Kiyohiko, Suwa-shi, Nagano 392-8502 (JP); NAKAZAWA, Chiyoshige, Suwa-shi, Nagano 392-8502 (JP)
(74) Representative: HOFFMANN EITLE
(86) International application number: PCT/JP2007/053801
(87) International publication number: WO 2007/100008

(57) **Abstract**

It is an object of the invention to provide a photocurable ink composition excellent in curability, while keeping low viscosity and storage stability. Another object of the invention is to provide an ink jet recording method and an ink jet recording apparatus which can provide a high image quality image.

The photocurable ink composition according to the invention comprises at least one of an allyl group-containing compound and an N-vinyl compound as a polymerizable compound and at least one of thioxanthone and an amine as a polymerization accelerator. The ink jet recording method and ink jet recording apparatus according to the invention use the above-mentioned photocurable ink composition, and is constituted so as to initiate light irradiation 0.1 to 20 s after ejection of this ink composition from a head onto a recording medium.

## Description

### TECHNICAL FIELD

The present invention relates to a photocurable ink composition and an ink jet recording method, and an ink jet recording apparatus, and particularly to a photocurable ink composition excellent in curability while keeping low viscosity and storage stability and an ink jet recording method using the ink composition, which forms a high-definition image, and an ink jet recording apparatus equally using the above-mentioned photocurable ink composition, which forms a high-definition image.

### BACKGROUND ART

An ink jet recording method is a printing method in which droplets of an ink composition are allowed to fly and deposited on a recording medium such as paper to perform printing. This ink jet recording method is characterized by that images having high resolution and high quality can be printed at high speed. The ink used in the ink jet recording method is generally one mainly comprising an aqueous solvent and containing a coloring component and a wetting agent such as glycerin for the purpose of preventing clogging.

On the other hand, when printing is performed on a recording medium such as paper or cloth into which the aqueous ink is hard to penetrate, or a plate or a film made of a material such as metal or plastics into which the aqueous ink does not penetrate, for example, a resin such as a phenol, melamine, vinyl chloride, acrylic or polycarbonate resin, the ink is required to contain a component which can allow the coloring material to be stably fixed to the recording medium. To such a demand, there is disclosed, for example, a photocurable ink jet ink comprising a coloring material, an photocuring agent (radically polymerizable compound), a (photoradical) polymerization initiator and the like in patent document 1. It is disclosed that according to this ink, ink blurring to a recording medium can be prevented, thereby being able to improve image quality.

Further, in patent document 2, there has been disclosed a method of adjusting the time from after ink landing on a recording medium to light irradiation in order to adjust the average thickness of an ink dot coating, thereby obtaining high-quality printing. Furthermore, in patent document 3, it is described that in order to perform high-quality image formation to a recording medium, printing is made using an ink jet printer characterized in structure, thereby adjusting the time from after ink landing on a recording medium to light irradiation. Moreover, in patent document 4, it is disclosed that in order to prevent a recording medium from contracting or being distorted by irradiation of high-illuminance UV light irradiated for enhancing ink curability, the time from after ink landing on a recording medium to light irradiation is adjusted, as well as using a printer in which the illuminance of light is controlled.

In a photocurable ink jet ink used in an ink jet recording method, it has been considered that one having high polymerizability is preferred in order to improve ink curability. Accordingly, there has been developed a method of using a multifunctional compound as a polymerizable compound, a thioxanthone-based compound as a photopolymerization initiator, and optionally an amine or aminobenzoate-based compound as a photopolymerization initiator aid (patent document 5). However, the ink described in patent document 5 becomes high in viscosity, so that treatment such as heating becomes necessary for using it as an ink jet ink.

Patent Document 1: U.S. Patent 5,623,001
Patent Document 2: JP-T-2003-145914
Patent Document 3: JP-A-2004-001437
Patent Document 4: JP-A-2004-106543
Patent Document 5: JP-T-2000-504778

An object of the invention is to solve the above-mentioned problem accompanied with the ink disclosed in patent document 5 noted above and to provide a photocurable ink composition excellent in curability and storage stability while keeping low viscosity of the ink.

Further, in an ink jet recording method using a photocurable ink, when the timing of curing of the ink is too fast, the ink is hard to spread on a recording medium to form an image with streaks. On the other hand, when the timing of curing is late, it becomes hard to cure the ink, or deterioration of image quality caused by variations in dot shape occurs, by changes in ink composition due to oxygen inhibition. However, in patent documents 2 to 5 described above, it is not described at all that a high image quality image is obtained by adjusting the timing from ink landing to initiation of light irradiation taking the above-mentioned matters into consideration.

It is an object of the invention to obtain a high image quality image by adjusting the time from after ink landing on a recording medium to initiation of light irradiation in an ink jet recording method using the above-mentioned photocurable ink composition. Further, another object of the invention is to equally obtain a high image quality image in an ink jet recording apparatus using the above-mentioned photocurable ink composition.

### DISCLOSURE OF THE INVENTION

The present inventors have conducted intensive studies, and as a result, have found that the above-mentioned objects can be achieved by employing the following constitution, thus leading to completion of the invention.
That is, the invention is as follows:
(1) A photocurable ink composition comprising at least one of an allyl group-containing compound and an N-vinyl compound as a polymerizable compound and at least one of thioxanthone and an amine as a polymerization accelerator;
(2) The photocurable ink composition described in (1), wherein the above-mentioned allyl group-containing compound is allyl glycol;
(3) The photocurable ink composition described in (1), wherein the above-mentioned N-vinyl compound is N-vinylformamide;
(4) The photocurable ink composition described in any one of (1) to (3), wherein the above-mentioned amine is an aminobenzoate;
(5) The photocurable ink composition described in any one of (1) to (4), wherein the above-mentioned at least one of an allyl group-containing compound and an N-vinyl compound is contained in the ink composition in an amount of 20 to 80% by weight;
(6) The photocurable ink composition described in any one of (1) to (5), which comprises a photopolymerization initiator and a coloring material;
(7) The photocurable ink composition described in (1) to (6), wherein the above-mentioned photocurable ink composition is a two-liquid type ink composition;
(8) The photocurable ink composition described in (1) to (7), wherein the photocuring of the above-mentioned photocurable ink composition is UV curing;
(9) An ink jet recording method using the photocurable ink composition described in any one of (1) to (8), which comprises initiating light irradiation 0.1 to 20 s after ejection of the above-mentioned photocurable ink composition from a head onto a recording medium;
(10) The ink jet recording method described in (9), wherein the above-mentioned photocurable ink composition is a two-liquid type ink composition, and the two-liquid type ink composition is mixed before ejection from the head;
(11) The ink jet recording method described in (9), wherein the above-mentioned photocurable ink composition is a two-liquid type ink composition, and the two-liquid type ink composition is mixed on the recording medium;
(12) The ink jet recording method described in any one of (9) to (11), wherein the photocuring of the above-mentioned photocurable ink composition is UV curing, and a light emitting diode or a laser diode is used as a light source for the light irradiation; and
(13) An ink jet recording apparatus using the photocurable ink composition described in any one of (1) to (8), which has a mechanism of initiating light irradiation 0.1 to 20 s after ejection of the above-mentioned photocurable ink composition from a head onto a recording medium.

The photocurable ink composition according to the invention comprises at least one of an allyl group-containing compound and an N-vinyl compound as a polymerizable compound and at least one of thioxanthone and an amine as a polymerization accelerator, thereby being able to improve curability while keeping low viscosity and storage stability.
Further, in the ink jet recording method and ink jet recording apparatus according to the invention, light irradiation is initiated 0.1 to 20 s after ejection of the above-mentioned photocurable ink composition from a head onto a recording medium, thereby being able to obtain high image quality. Furthermore, the ink composition and a light source for light irradiation are contrived, as well as adjusting the time from after ink landing on a recording medium to initiation of light irradiation, thereby being able to form an excellent image.

### BRIEF DESCRIPTION OF THE DRAWINGS

Fig. 1 is a schematic perspective view showing a main construction of one embodiment of an ink jet printer equipped with a light irradiating apparatus in an ink jet recording apparatus according to the invention.
Fig. 2 is an enlarged perspective view of the light irradiating apparatus shown in Fig. 1.
Fig. 3 is a block diagram showing an electric construction in the ink jet printer shown in Fig. 1.
Fig. 4 is an illustrative view of an irradiation area at the time when a plurality of light emitting elements which form elliptical light images are arranged so that the elliptical light images of the respective elements are continuous with each other along a minor axis direction thereof.
Fig. 5 is a view showing another example of a continuous state of the elliptical light images c.

The reference numerals and signs used in the drawings denote the followings, respectively.
20: Ink Jet Printer, 30: Paper Feed Motor, 32: Rotary Encoder, 34; Paper Feed Roller, 40: Platen, 50: Carriage, 52: Print Head (Recording Head), 54: Black Cartridge, 56: Color Ink Cartridge, 60: Carriage Motor, 62: Tow Belt, 64: Guide Rail, 70: Linear Encoder, 72: Coding Plate, 74: Photo Sensor, 80: Capping Device; 90: Light Irradiating Apparatus, 91: Element Support Means, 91a: Attachment Surface, 92: Bracket, 93: Bracket, 95: Light Emitting Element, 102: Main Control Circuit, 104: CPU, 110: ROM, 112: RAM, 114: EEPROM, 120: Interface Circuit, 130: Paper Feed Motor Driving Circuit, 140: Head Driving Circuit, 150: CR Motor Driving Circuit, 160: Light Irradiating Apparatus Driving Circuit, P: Print Paper (Recording Medium)

### BEST MODE FOR CARRYING OUT THE INVENTION

The invention will be described in detail below.
The photocurable ink composition according to the invention is **characterized in that** it comprises at least one of an allyl group-containing compound and an N-vinyl compound as a polymerizable compound.
The operation and effect of making it possible to decrease viscosity are achieved by containing at least one of the allyl group-containing compound and the N-vinyl compound as the polymerizable compound like this.

In the invention, the allyl group-containing compound used as the polymerizable compound is a generic name of a compound having a 2-propenyl structure (-CH₂CH=CH₂). A 2-propenyl group is also called an allyl group, and is used as a trivial name in the IUPAC nomenclature.
The allyl group-containing compounds include, for example, allyl glycol (manufactured by Nippon Nyukazai Co., Ltd.), trimethylolpropane diallyl ether, pentaerythrytol triallyl ether and glycerol monoallyl ether (the above are manufactured by Daiso Co., Ltd.), allyl group-containing polyoxyalkylene compounds whose trade names are Uniox, Unilub, Polycerin and Unisafe (manufactured by NOF Corporation) and the like. Of these, allyl glycol is particularly preferred as the allyl group-containing compound.

The above-mentioned N-vinyl compounds include Nvinylformamide, N-vinylcarbazole, N-vinylacetamide, N-vinylpyrrolidone, N-vinylcaprolactam and derivatives thereof, and particularly, N-vinylformamide is preferred.

In the photocurable ink composition according to the invention, at least one of the above-mentioned allyl group-containing compound and N-vinyl compound is preferably contained in the ink composition in an amount of 20 to 80% by weight. The content within this range can suitably achieve the operation and effect of "making it possible to decrease viscosity", compared to outside the range.

Further, the photocurable ink composition according to the invention is **characterized in that** it comprises at least one of thioxanthone and an amine as a polymerization accelerator.
The operation and effect of improving curability while keeping storage stability are achieved by containing at least one of thioxanthone and the amine as the polymerization accelerator.

Specific trade names of thioxanthone used in the invention include Darcurl TX, Quantacure CTX, Kayacure DETX-S and the like.
Further the amines include tetramethylethylenediamine (TEMD) and the like, and preferred is an aminobenzoate.
Specific trade names of the amines or the aminobenzoates include Darcur EHA and Darcur EDB (manufactured by Ciba Specialty Chemicals) and the like.

In the photocurable ink composition according to the invention, at least one of the above-mentioned thioxanthone and amine is preferably contained in the ink composition in an amount of 0.1 to 10% by weight. The content within this range can suitably achieve the operation and effect of "improving curability while keeping storage stability", compared to outside the range.

The photocurable ink composition according to the invention sometimes contains a photoradical polymerization initiator.
The photoradical polymerization initiators include, for example, benzylmethylketal, an α-hydroxyalkylphenone, an α-aminoalkylphenone, an acylphosphine oxide, an oxime ester, thioxanthone, an α-dicalbonyl, anthraquinone and the like. Further, there can also be used photopolymerization initiators available under the trade names of Vicure 10 and 30 (manufactured by Stauffer Chemical), Irgacure 127, 184, 500, 651, 2959, 907, 369, 379, 754, 1700, 1800, 1850, 819 and OXE01 and Darocur 1173, TPO and ITX (manufactured by Ciba Specialty Chemicals), Quantacure CTX (manufactured by Aceto Chemical), Kayacure BETX-S (manufactured by Nippon Kayaku Co., Ltd.) and ESACURE KIP150 (manufactured by Lamberti).

Further, the photocurable ink composition according to the invention sometimes contains a surfactant. Specific trade names thereof include BYK-UV3570, BYK-UV3500 and the like.

Furthermore, the photocurable ink composition according to the invention may contain a coloring material. Although the coloring material used in this case may be either a dye or a pigment, the pigment is more advantageous in view of image durability of printed matter.

As the dyes usable in the invention, there can be used various dyes usually used in inkjet recording, such as a direct dye, an acid dye, a food dye, a basic dye, a reactive dye, a disperse dye, a vat dye, a soluble vat dye and a reactive disperse dye.

As the pigment usable in the invention, an inorganic pigment or an organic pigment can be used without particular limitation.
As the inorganic pigment, there can be used carbon black produced by known processes such as a contact process, a furnace process and a thermal process, in addition to titanium oxide and iron oxide. Further, as the organic pigment, there can be used an azo pigment (including an azo lake, an insoluble azo pigment, a condensed azo pigment, a chelate azo pigment and the like), a polycyclic pigment (including a phthalocyanine pigment, a perylene pigment, a perynone pigment, an anthraquinone pigment, a quinacrydone pigment, a dioxazine pigment, a thioindigo pigment, an isoindolinone pigment, a quinofuralone pigment and the like), a dye chelate (including a basic dye type chelate, an acid dye type chelate and the like), a nitro pigment, a nitroso pigment, aniline black and the like.

As specific examples of the pigments, carbon blacks include No. 2300, No. 900, MCF 88, No. 33, No. 40, No. 45, No. 52, MA 7, MA 8, MA 100, No. 2200B and the like manufactured by Mitsubishi Chemical Corp.; Raven 5750, 5250, 5000, 3500, 1255 and 700, and the like manufactured by Columbia; Regal 400R, 330R and 660R, Mogul L and 700, Monarch 800, 880, 900, 1000, 1100, 1300 and 1400, and the like manufactured by Cabot; and Color Black FW1, FW2, FW2V, FW18 and FW200, Color Black S150, S160 and S170, Printex 35, U, V and 140U, Special Black 6, 5, 4A and 4, and the like manufactured by Degussa.

The pigments used in a yellow ink include C. I. Pigment Yellow 1, 2, 3, 12, 13, 14, 16, 17, 73, 74, 75, 83, 93, 95, 97, 98, 109, 110, 114, 120, 128, 129, 138, 150, 151, 154, 155, 180, 185, 213 and the like.
Further, the pigments used in a magenta ink include C. I. Pigment Red 5, 7, 12, 48(Ca), 48(Mn), 57(Ca), 57:1, 112, 122, 123, 168, 184, 202 and 209, C. I. Pigment Violet 19 and the like.
Furthermore, the pigments used in a cyan ink include C. I. Pigment Blue 1, 2, 3, 15:3, 15:4, 60, 16, 22 and the like.

According to a preferred embodiment of the case where the pigment is contained in the photocurable ink composition according to the invention, the pigment preferably has an average particle size ranging from 10 to 200 nm, and more preferably from about 50 to 150 nm. Further, the coloring material is added in the photocurable ink composition preferably in an amount ranging from about 0.1 to 25% by weight, and more preferably in an amount ranging from about 0.5 to 15% by weight.

The pigment can be used in the photocurable ink composition as a pigment dispersion obtained by dispersing it in an aqueous medium with a dispersant or a surfactant. As the preferred dispersant, there can be used a dispersant conventionally used for preparing a pigment dispersion, for example, a polymer dispersant.

Further, when the photocurable ink composition contains the coloring material, the photocurable ink composition containing the coloring material may have a plurality thereof for each color. For example, when a dark color or light color of the same series is added for each color in addition to the basic four colors of yellow, magenta, cyan and black, there are mentioned light magenta which is a light color and red which is a dark color in addition to magenta, light cyan which is a light color and blue which is a dark color in addition to cyan, and gray and light black which are light colors and mat black which is a dark color in addition to black.

To the photocurable ink composition according to the invention, there may be added a wetting agent, a penetrating solvent, a pH adjuster, a preservative, a mildewproofing agent or the like as another additive which is publicly known or used and can be used in an UV curable ink composition.
In addition, a leveling additive, a matte agent, or a polyester-based resin, polyurethane-based resin, vinyl-based resin, acrylic resin, rubber-based resin or wax for adjusting film physical properties can be added as needed.

Further, the photocurable ink composition according to the invention may be either a one-component type or a two-liquid type.
When the ink composition is the two-liquid type, it is possible to mix before ejection from a printer head, and also possible to mix on a recording medium after ejection.
When mixed after ejection, two kinds of inks can be mixed by ejecting them to the same position on the recording medium.

In the photocurable ink composition according to the invention, curing reaction is performed by carrying out light irradiation.
It is preferred that an irradiation light source emits a light having a wavelength of 350 nm to 450 nm, although not particularly limited.
When UV light is used, the UV dose is from 10 mJ/cm² to 10,000 mJ/cm², and preferably ranges from 50 mJ/cm² to 6,000 mJ/cm². When the ultraviolet dose is within such a range, the curing reaction can be sufficiently performed.
Further, as the UV light to be irradiated, it is preferred in terms of safety and environment that UV light in a long wavelength region of 350 nm or more which generates no ozone is used. Furthermore, it is preferred that the UV light to be irradiated is not one having a continuous spectrum, but one having a narrow light emission peak width. The wavelength of this light emission peak is preferably within the range of 350 to 420 nm.

A light-emitting diode or a laser diode can be used as the light source of light irradiation.
In the case of UV light irradiation, UV light emitting semiconductor elements such as an UV LED and an UV light emitting semiconductor laser are preferred in terms of energy consumption, miniaturization and the lamp life. When the UV LED is used, it is preferred, for example, to combine an LED having a light emitting peak wavelength of 365 nm, an LED having a light emitting peak wavelength of 380 nm and an LED having a light emitting peak wavelength of 395 nm.

Further, in the case of UV light, the UV dose is from 10 mJ/cm² to 10,000 mJ/cm², and preferably ranges from 50 mJ/cm² to 6,000 mJ/cm². When the ultraviolet dose is within such a range, the curing reaction can be sufficiently performed.
Other means for UV irradiation include lamps such as a metal halide lamp, a xenon lamp, a carbon arc lamp, a chemical lamp, a low-pressure mercury lamp and a highpressure mercury lamp. For example, the UV irradiation can be performed by using commercially available lamps such as H Lamp, D Lamp and V Lamp manufactured by Fusion System can also be used.

The ink jet recording method according to the invention uses the photocurable ink composition described above, and when recording is made on a recording medium using this photocurable ink composition, light irradiation is initiated 0.1 to 20 s after ejection of the photocurable ink composition from a head of an ink jet printer onto the recording medium.
When the light source is mounted on a carriage, the timing from ejection to light irradiation is adjusted by changing the distance between an ink-ejecting nozzle and the light source, or can be adjusted by changing the scanning speed of the carriage. On the other hand, when the light source is mounted on a printer main body, the timing can be adjusted by changing the feed speed of the recording medium, and further, can be adjusted by changing the timing of lighting the light source. When the timing of curing is late, it becomes hard to cure the ink by changes in ink composition due to oxygen inhibition, or variations in dot shape caused by changes in the recording medium occur. Further, when the timing of curing is fast, the ink is hard to spread on the recording medium to form an image with streaks. By adjusting the time until initiation of light irradiation to 0.1 to 20 s, these disadvantages are eliminated to be able to form a high image quality image.

When the above-mentioned photocurable ink composition is a two-liquid type ink composition, this two-liquid type ink composition is mixed before ejection from the head or on the recording medium. Further, when photocuring of the above-mentioned photocurable ink composition is UV curing, the light-emitting diode or the laser diode is used as the light source of this light irradiation.

The ink jet recording apparatus according to the invention uses the above-mentioned photocurable ink composition, similarly to the above-mentioned ink jet recording method according to the invention, and has a mechanism of initiating light irradiation 0.1 to 20 s after ejection of the photocurable ink composition from the head onto the recording medium.
The ink jet printer (ink jet recording apparatus) using the above-mentioned photocurable ink composition is not particularly limited, as long as it does not inhibit light irradiation. One embodiment of such an ink jet recording apparatus will be described below with reference to the drawings.

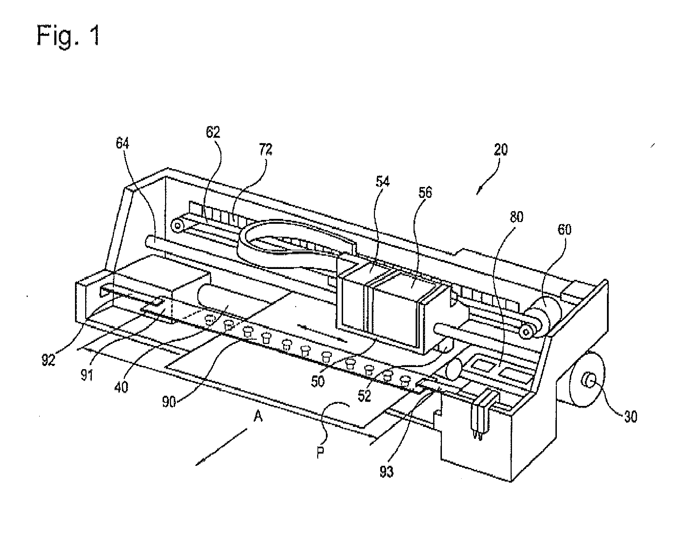

Fig. 1 is a schematic perspective view showing a main construction of one embodiment of an ink jet printer 20 according to the invention.
This printer 20 comprises a paper feed motor 30 for feeding print paper P that is a recording medium, a platen 40, a print head 52 as a recording head for reducing a photocurable ink to fine particle size and ejecting it to the print paper P, thereby adhering it to the print paper P, a carriage 50 equipped with the print head 52, a carriage motor 60 for moving the carriage 50 in a main scanning direction, and a light irradiating apparatus 90 for irradiating light in a specific wavelength region to an ink-adhered surface of the print paper P to which the photocurable ink is adhered by means of the print head 52.

The carriage 50 is towed by means of a tow belt 62 driven by the carriage motor 60 and moves along a guide rail 64. The carriage 50 is equipped with a black cartridge 54 as a black ink container accommodating a black ink supplied to the print head 52 and a color ink cartridge 56 as a color ink container accommodating a color ink supplied to the print head 52, as well as the print head 52.
The inks accommodated in the respective cartridges 54 and 56 are photocurable inks which are curable by irradiation of UV light or visible light in the vicinity thereof.

A capping device 80 for sealing a nozzle surface of the print head 52 at the time of stop is provided in a home position of the carriage 50 (a position on a right side in Fig. 1). When a printing job is ended and the carriage 50 reaches an upper part of the capping device 80, the capping device 80 is automatically lifted by means of a mechanism not shown to seal the nozzle surface of the print head 52. By this capping, the ink in a nozzle can be prevented from being dried. The positioning control of the carriage 50 is carried out, for example, in order to accurately place the carriage 50 in the position of the capping device 80.

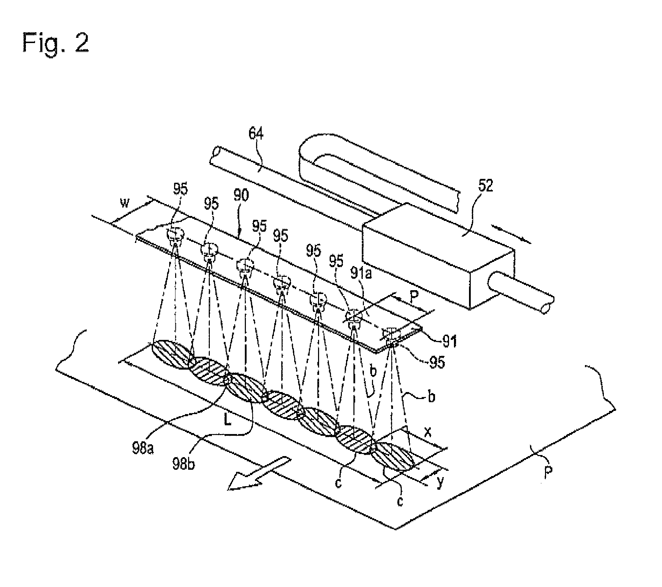

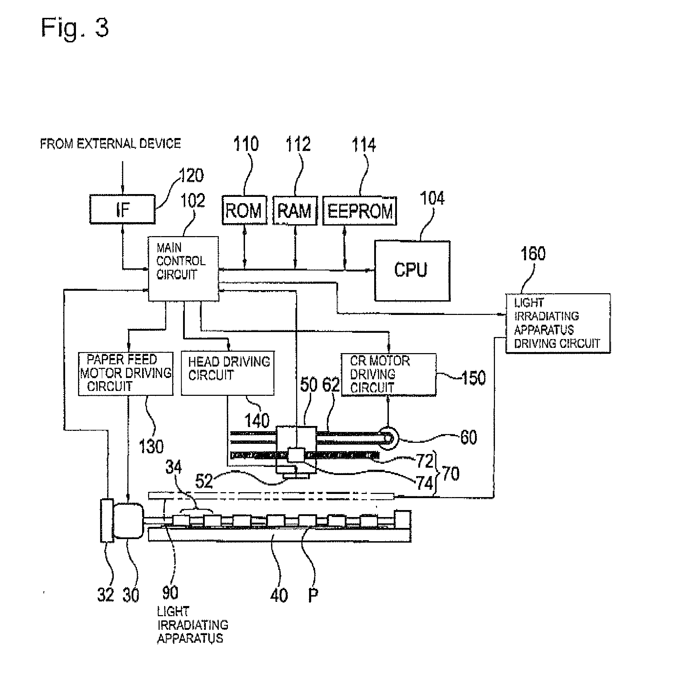

As shown in Figs. 1 and 2, the light irradiating apparatus 90 comprises a plurality of light emitting elements 95 for emitting light in a specific wavelength region, an element support means 91 for supporting these light emitting elements 95 in a line along the width direction of the print paper P, brackets 92 and 93 for fixing the element support means 91 to a housing of the printer 20, and a light irradiating apparatus driving circuit 160 (see Fig. 3) for controlling the light emission and light-out of the respective light emitting elements 95.

The element support means 91 is a plate-shaped structural member having a predetermined width W (see Fig. 2) along the transfer direction of the print paper P in the printer 20 and a predetermined length A (see Fig. 1) along the width direction of the print paper P. The length A is set to be greater than the maximum width of paper which can be handled in the printer 20.
The element support means 91 is disposed in parallel with a surface of the print paper P which acts as a surface to be irradiated with light, and fixed to the housing of the printer 20 by means of the brackets 92 and 93.
Then, a surface opposite to the surface of the print paper P of the element support means 91 is an attachment surface 91a for attaching the light emitting elements 95.

Further, a position in which the element support means 91 is installed is a position apart from the print head 52 by a definite distance downstream in the transfer direction of the print paper P.
The brackets 92 and 93 fix ends of the element support means 91 to the housing of the printer 20 with a screw or through concavo-convex fitting.

In the case of this embodiment, all of the light emitting elements 95 emit light b in a specific wavelength region which is effective for curing the photocurable ink ejected and applied to the print paper P by the print head 52, and form elliptical light images c on the surface of the print paper P, which is a surface to be irradiated.
The elliptical light image c shows an irradiation area of the light emitted from each light emitting element 95 on the print paper P. Each light image c is in the same-sized form having a major axis size of x and a minor axis size of y.
Further, in this specification, similarly to the slenderness ratio of a rectangle, the ratio x/y of the major axis size x to the minor axis size y of an ellipsoid is defined as the aspect ratio. As each light emitting element 95, there is used one which gives an elliptical light image c having an aspect ratio of 2.0 or more.

Furthermore, on the attachment surface 91a of the element support means 91, the light emitting elements 95 are arranged in a line along the width direction of the print paper P, as shown in Fig. 2.
The total number of the light emitting elements 95 installed in a line on the attachment surface 91a is n. These n light emitting elements 95 are attached to the attachment surface 91a at a predetermined arrangement space p so that the light images c are continuous with each other along the major axis direction, overlapping end portions in the major axis direction thereof onto each other.

As a result, there is formed an approximately strip-shaped irradiation area 98 in which the light images c are alternately arranged along the width direction of the print paper P.
This irradiation area 98 has a construction in which an irradiation area 98a having a strong irradiation intensity formed by overlapping the end portions of the light images c adjacent to each other and an irradiation area 98b having a basic irradiation density in the light images c are alternately arranged.
When the total number of the light emitting elements 95 used is n, this irradiation area 98 is in an approximately strip-shaped form having a size of L (L is nearly equal to np) in the width direction of the print paper P and a size of y in the transfer direction of the print paper P.

Further, in the case of this embodiment, semiconductor laser elements are employed as the light emitting elements 95. In the selection of the light emitting element, it is preferred to select one in which the peak wavelength of light in a specific wavelength region output from the semiconductor laser element is not coincident with the absorption wavelength of a light absorbing substance in the photocurable ink.
For example, as a light emitting element which emits UV light having a wavelength of 400 nm or less, there are employable one having a model name of NDHU 110APAE2 (oscillation wavelength: 370 to 380 nm) of a semiconductor laser diode series manufactured by Nichia Corporation or the like, by way of example.

On the other hand, as one which emits visible light having a wavelength of 400 nm to 450 nm, there is employable one having a model name of NDHV310APC, NDHV220APAE1 (oscillation wavelength: 400 to 415 nm) or the like, or a model name of MDHB20APAE1 (oscillation wavelength: 435 to 445 nm) or the like, of a semiconductor laser diode series manufactured by Nichia Corporation.

Then, the electric construction of the printer 20 will be described with reference to Fig. 3. Fig. 3 is a block diagram showing the electric construction of the printer 20.
The printer 20 comprises a main control circuit 102, a CPU 104, and various memories (an ROM 110, an RAM 112 and an EEPROM 114) connected to the main control circuit 102 and the CPU 104 through buses.
To the main control circuit 102, there are connected an interface circuit 120 for communicating a signal with an external device such as a personal computer, a paper feed motor driving circuit 130, a head driving circuit 140, a CR motor driving circuit 150, and a light irradiating apparatus driving circuit 160 for controlling an operation of the light irradiating apparatus 90.

The paper feed motor 30 is driven by the paper feed motor driving circuit 130 to rotate a paper feed roller 34, thereby moving the print paper P in the transfer direction. The paper feed motor 30 is provided with a rotary encoder 32, and a signal output from the rotary encoder 32 is input to the main control circuit 102.

The print head 52 having a plurality of nozzles (not shown) is mounted on a bottom face of the carriage 50. Each nozzle is driven by the head driving circuit 140 to eject droplets of the photocurable ink supplied from each cartridge 54 or 56 toward a recording medium such as paper, cloth or film.

The carriage motor 60 is driven by the CR motor driving circuit 150. This printer 20 is equipped with a linear encoder 70 for detecting the position and speed of the carriage 50 along the main scanning direction. This linear encoder 70 is constituted by a linear coding plate 72 provided in parallel with the main scanning direction and a photo sensor 74 attached to the carriage 50. An output signal from the linear encoder 70 is input to the main control circuit 102.

The light irradiating apparatus driving circuit 160 controls light emission and light-out of the respective light emitting elements 95 equipped, based on a control signal sent from the main control circuit 102.
Specifically, when the print head 52 is driven to start printing or when the printing operation is started and an photocurable ink-adhered surface on the print paper P reaches the irradiation area 98 of the light in a specific wavelength region according to the light irradiating apparatus 90, all of the light emitting elements 95 installed on the element support member 91 are brought into a light emitting state, and the light emitting state of the respective light emitting elements 95 is maintained until the photocurable ink-adhered surface on the print paper P completely passes through the irradiation area 98 of the light in a specific wavelength region according to the light irradiating apparatus 90. That is, the respective light emitting elements 95 are allowed to continuously emit light until the photocurable ink-adhered surface on the print paper P has passed through the irradiation area 98 of the light in a specific wavelength region according to the light irradiating apparatus 90.

The main control circuit 102 has the function of supplying a control signal to the four driving circuits 130, 140, 150 and 160, respectively, and also has the function of executing the decoding of various print commands received by the interface circuit 120, the control related to the regulation of print data, the monitoring of various sensors, and the like. On the other hand, the CPU 104 has various functions for assisting the main control circuit 102, and executes, for example, the control of various memories, and the like.

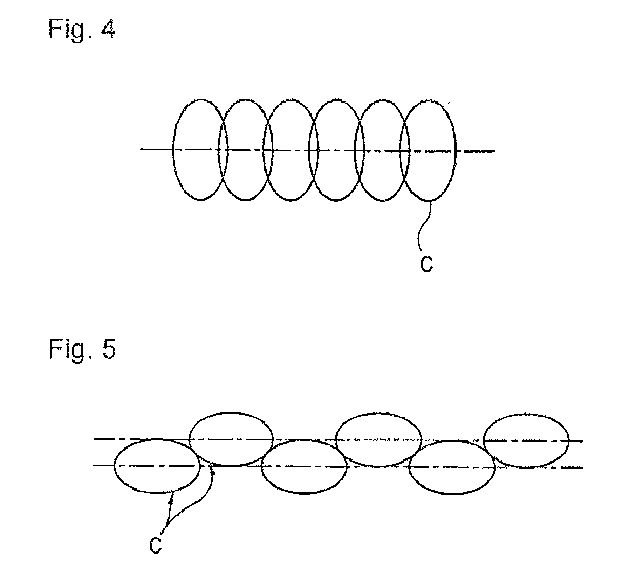

In the light irradiating apparatus 90 described above, the light emitting elements are arranged with spacing from each other in the major axis direction of the light images c so that the elliptical light images c formed by the respective light emitting elements 95 are continuous with each other along a major axis direction of the ellipsoid. Accordingly, there can be performed the light irradiating process of forming the approximately strip-shaped irradiation area 98 in which the light images c are continuously arranged along the major axis direction, in the ink coating area on the print paper P.
Then, compared to the case of the light irradiating apparatus in which the light emitting elements are arranged so that the elliptical light images c are continuous with each other along the minor axis direction, the space p between the light emitting elements adjacent to each other can be set large, as shown in Fig. 4. Further, as shown in Fig. 2 as the approximately strip-shaped irradiation area 98, it becomes possible to irradiate light in a specific wavelength region over the larger width L by the smaller number of light emitting elements used.
Accordingly, when light in a specific wavelength region is irradiated over a predetermined width of a surface to be irradiated, it becomes possible to reduce the number of light emitting elements used as light sources to lower cost.

The outgoing light from each light emitting element 95 is turned to diffused light. Accordingly, when the attachment position of the element support means 91 is adjusted to change the distance between the light emitting element 95 and the surface to be irradiated on the print paper P, the major axis size x and the minor axis size y of the light image c change based on this.
When a semiconductor laser diode having a model name of NDHV 310APC (light diffusion in FWHM is (θ∥) 8° in the minor axis direction of the light image, and (θ⊥) 22° in the major axis direction of the light image) manufactured by Nichia Corporation was used and the distance (irradiation distance) between the light emitting element 95 and the surface to be irradiated on the print paper P was 30 mm in this embodiment, the light image c had a major axis size x of 24.1 mm, a minor axis size y of 9.95 mm and an aspect ratio of 2.20.
On the other hand, when the distance (irradiation distance) between the same light emitting element and the surface to be irradiated on the print paper P was 50 mm, the light image c had a major axis size x of 39.1 mm, a minor axis size y of 15.5 mm and an aspect ratio of 2.36.

Then, for the case of each irradiation distance, on the assumption that the width of the print paper P is A4-size width (210 mm), and that the irradiation area 98 is formed fully in its paper width, the number of light emitting elements needed was compared between the case of the light emitting element arrangement shown in Fig.2 and the case of the element arrangement for comparison shown in Fig. 4.
When the irradiation distance was 30 mm, the number of light emitting elements needed was 9 for the element arrangement of the embodiment shown in Fig. 2. In contrast, 22 light emitting elements were needed for the element arrangement of the comparative example shown in Fig.4. It was confirmed that the number of elements could be significantly decreased according to the above-mentioned embodiment.
Further, when the irradiation distance was 50 mm, the number of light emitting elements needed was 6 for the element arrangement of the embodiment shown in Fig. 2. In contrast, 14 light emitting elements were needed for the element arrangement of the comparative example shown in Fig.4. In this case, it was also confirmed that the number of elements could be significantly decreased according to the above-mentioned embodiment.

Furthermore, the space distance p between the light emitting elements 95 as the light sources can be set large, so that heat generated from the respective light emitting elements 95 becomes difficult to be accumulated between the light emitting elements 95, which can prevent the light emitting elements 95 themselves from suffering from thermal damage due two the accumulated heat, thereby being able to prevent a decrease in life of the light sources due to their thermal damage.
Accordingly, when mounted on the periphery of the print head 52 of the ink jet printer 20 two cure by light irradiation the light curing type ink adhered onto the print paper P as the recording medium by means of the print head 52 of the printer 20, heat generation of the light irradiating apparatus 90 itself can be inhabited. It becomes therefore unnecessary to install a cooling operation and means such as a cooling fun on the printer 20, which also largely contributes to miniaturization of the ink jet printer 20 and cost reduction.

In addition, the photocurable ink can allow the curing action to effectively proceed by irradiation of UV light having a specific wavelength. However, even when visible light close to the UV light is irradiated in place of the UV light, curing processing is possible although the processing efficiency decreases, compared to the case of UV irradiation.
In general, a light emitting element which emits UV light becomes more expensive than a light emitting element which emits visible light.
Consequently, taking into account the difference in price between the light emitting element for UV light and the light emitting element for visible light, the processing speed required and the like, the adoption of the light emitting element for visible light which is low in price is also appropriately set. This makes it possible to provide the light irradiating apparatus 90 well balanced in cost and performance.

Further, in the photocurable ink, the difference occurs in the wavelength region of light absorbed when irradiated, depending on the difference in composition of a coloring material component (such as a pigment or a dye) and other components. This causes the occurrence of the difference in curing time of the ink in some cases.
Consequently, light irradiation in a wide wavelength region having a plurality of light emitting peaks becomes possible by using light emitting elements different in the light emitting wavelength peak in the arrangement of the plurality of light emitting elements, like the above-mentioned embodiment. Even when light of a part of the light emitting peaks is absorbed, light of the other light emitting peaks effectively contributes to curing of the ink to make it possible to stably maintain the curing efficiency of the ink. Thus, it becomes possible that irradiating light to be absorbed complies with various kinds of photocurable inks different in the light emitting wavelength peak. As a result, the ink species to be complied with can be increased to improve the versatility as the light emitting apparatus 90.

When the aspect ratio of the elliptical light images c is set to 2.0 or more like this embodiment, the difference in an arrangement space between the light emitting elements between the case where the elliptical light images c are arranged along the major axis direction and the case where arranged along the minor axis direction becomes extremely significant, compared to the case where light emitting elements which form elliptical light images c having an aspect ratio of less than 2.0 are employed. A reduction in the number of the light emitting elements 95 used as the light sources and enlargement of the space between the light emitting elements 95 assist diffusion of heat generated by the light emitting elements 95, and the effect of preventing the light emitting elements 95 from deteriorating by thermal damage due to accumulated heat becomes clear.

Further, when the semiconductor laser element is employed as the light emitting element 95 like this embodiment, outgoing light forms an elliptical light image c for structural reasons of the element itself such as a semiconductor laser diode that is a semiconductor laser element, and it becomes possible to obtain the elliptical light image c effective for enlargement of the space between the light emitting elements 95 without using a special optical means.
Furthermore, in light emission by the semiconductor laser element, outgoing light diffuses compared to light emission of a solid laser, so that the wider area can be irradiated with a light beam by one light emitting element 95. This is therefore suitable for decreasing the light emitting elements used, and at the same time, a combination with a scanning mechanism for enlarging the irradiation area of a light beam becomes unnecessary. This makes it possible to inexpensively secure the wide irradiation area of the light beam.

In addition, installation of the scanning mechanism becomes unnecessary, so that such a construction that the light emitting element 95 is attached to a movable part for scanning becomes unnecessary. Accordingly, it becomes possible to improve operational reliability and durability as the light irradiating apparatus 90 by employing design excluding the movable part which causes malfunction.

In the above-mentioned embodiment, the light emitting elements 95 were arranged in a line. However, they may be arranged in a plurality of lines parallel to each other. By arranging the light emitting elements in a plurality of lines parallel to each other, the whole irradiating area can be set to an arbitrary size along the transfer direction of the print paper P without being restricted by the major axis size x and the minor axis size y of the elliptical light image formed by the single light emitting element, and by increasing the number of light emitting element lines to enlarge the irradiating area of light in the transfer direction of the recording medium, the speeding up of processing can be achieved.
Further, the continuous state of the elliptical light images c along the width direction of the print paper P may be as shown in Fig. 5.

Furthermore, it is desirable that the light emitting wavelength of the semiconductor laser element used as the light emitting element in the invention is selected according to characteristics of the photocurable ink to be treated. Depending on the characteristics of the photocurable ink, it is possible to select a suitably usable one, other than those having the light emitting wavelengths shown in the above-mentioned embodiment.

In addition, the light emitting element which can be used in the invention is not limited to the semiconductor laser element. Any light emitting element other than the semiconductor laser element can also be used, as long as it is an element in which a light flux emitted from the element can be turned to diffused light to form an elliptical light image.
Further, even when the light emitting element line is formed by light emitting elements which emit light in an approximately similar wavelength region, the light emitting element line can be formed by only those having the same light emitting wavelength peak, or by mixing those different in the light emitting wavelength peak.

Furthermore, in the above-mentioned embodiment, the light emitting element 95 in the light irradiating apparatus 90 is allowed to achieve continuous light emission during print processing. However, the light emitting element 95 may be allowed to achieve pulse light emission by a predetermined time unit so as to restrain the amount of light irradiated to the photocurable ink to the bare minimum, based on the characteristics of the photocurable ink used or the information of a print region (such as the amount of the photocurable ink applied by ejection).
Thereby, the amount of light irradiated to the photocurable ink is controlled to the bare minimum to be able to achieve a reduction in power consumption in the light irradiating apparatus 90, a reduction in heat generation of the light emitting element 95, and prolongation of life by shortening the actual working hours of the light emitting element 95.
Further, in the above-mentioned embodiment, a serial type head which ejects an ink while moving the head 52 has been used. However, a line type head which adheres an ink to a recording medium without moving the head by ejecting the ink in the width direction of print paper in a line form may also be used.

### EXAMPLES

The present invention will be illustrated in greater detail with reference to the following Examples and Comparative Examples, but the invention should not be construed as being limited thereto.

### [Examples 1 to 8 and Comparative Examples 1 to 8]

Ink compositions shown in Tables 1 to 4 were prepared. The respective ratios of the ink compositions are parts by weight. In the ink compositions of Examples 1 to 8 shown in Tables 1 to 4, "allyl glycol" was used as the allyl group-containing compound (polymerizable compound), and "N-vinylformamide was used as the N-vinyl compound (polymerizable compound). Further, "Darocur ITX" was used as thioxanthone (polymerization accelerator), and "Darcur EHA" was used as the amine (polymerization accelerator). Furthermore, in Comparative Examples 1, 3, 5 and 7, the ink compositions contain no amine, and in Comparative Examples 2, 4, 6 and 8, the ink compositions contain no allyl group-containing compound and no N-vinyl compound.

**[Table 1]**

| Black | | | | | |
|---|---|---|---|---|---|
| | Example 1 | Example 2 | | Compara. Example 1 | Compara. Example 2 |
| | | A | B | | |
| Allyl Glycol | 31.2 | 25 | 41 | 33.2 | |
| N-Vinylformamide | 25 | | 21.2 | 25 | |
| Tripropylene Glycol Diacrylate | 25 | 67.9 | | 25 | 55 |
| EO Adduct Trimethylolpropane Triacrylate | 8 | | 33 | 8 | 34.2 |
| Irgacure 1800 | 5 | 5 | | 5 | 5 |
| Darocur EHA | 1 | 1 | 1 | | 1 |
| Darocur ITX | 1 | 1 | | | 1 |
| BYK-UV3570 | 0.1 | 0.1 | 0.1 | 0.1 | 0.1 |
| Pigment Black-7 | 3 | | 3 | 3 | 3 |
| Dispersant (polyoxyalkylenepolyalkylene-polyamine) | 0.7 | | 0.7 | 0.7 | 0.7 |

**[Table 2]**

| Cyan | | | | | |
|---|---|---|---|---|---|
| | Example 3 | Example 4 | | Compara. Example 3 | Compara. Example 4 |
| | | A | B | | |
| Allyl Glycol | 31.2 | | 41 | 33.2 | |
| N-Vinylformamide | 25 | 25 | 21.2 | 25 | |
| Tripropylene Glycol Diacrylate | 25 | 67.9 | | 25 | 55 |
| EO Adduct Trimethylolpropane Triacrylate | 8 | | 33 | 8 | 34.2 |
| Irgacure 1800 | 5 | 5 | | 5 | 5 |
| Darocur EHA | 1 | 1 | 1 | | 1 |
| Darocur ITX | 1 | 1 | | | 1 |
| BYK-UV3570 | 0.1 | 0.1 | 0.1 | 0.1 | 0.1 |
| Pigment Blue-15:3 | 3 | | 3 | 3 | 3 |
| Dispersant (polyoxyalkylenepolyalkylene-polyamine) | 0.7 | | 0.7 | 0.7 | 0.7 |

**[Table 3]**

| Magenta | | | | | |
|---|---|---|---|---|---|
| | Example 5 | Example 6 | | Compara. Example 5 | Compara. Example 6 |
| | | A | B | | |
| Allyl Glycol | 31 | | 41 | 33 | |
| N-Vinylformamide | 25 | 25 | 21 | 25 | |
| Tripropylene Glycol Diacrylate | 25 | 67.9 | | 25 | 55 |
| EO Adduct Trimethylolpropane Triacrylate | 8 | | 33 | 8 | 34 |
| Irgacure 1800 | 5 | 5 | | 5 | 5 |
| Darocur EHA | 1 | 1 | 1 | | 1 |
| Darocur ITX | 1 | 1 | | | 1 |
| BYK-UV3570 | 0.1 | 0.1 | 0.1 | 0.1 | 0.1 |
| Pigment Violet-19 | 3 | | 3 | 3 | 3 |
| Dispersant (polyoxyalkylenepolyalkylene-polyamine) | 0.9 | | 0.9 | 0.9 | 0.9 |

**[Table 4]**

| Yellow | | | | | |
|---|---|---|---|---|---|
| | Example 7 | Example 8 | | Compara. Example 7 | Compara. Example 8 |
| | | A | B | | |
| Allyl Glycol | 31.3 | | 41 | 33.3 | |
| N-Vinylformamide | 25 | 25 | 21.3 | 25 | |
| Tripropylene Glycol Diacrylate | 25 | 67.9 | | 25 | 55 |
| EO Adduct Trimethylolpropane Triacrylate | 8 | | 33 | 8 | 34.3 |
| Irgacure 1800 | 5 | 5 | | 5 | 5 |
| Darocur EHA | 1 | 1 | 1 | | 1 |
| Darocur ITX | 1 | 1 | | | 1 |
| BYK-UV3570 | 0.1 | 0.1 | 0.1 | 0.1 | 0.1 |
| Pigment Yellow-155 | 3 | | 3 | 3 | 3 |
| Dispersant (polyoxyalkylenepolyalkylene-polyamine) | 0.6 | | 0.6 | 0.6 | 0.6 |

### [Viscosity Evaluation]

For the respective ink compositions of Examples 1 to 8 and Comparative Examples 1 to 8 described above, the initial viscosity at 25°C was measured, and the results thereof are shown in Table 5.

**[Table 5]**

| Viscosity (mPa·s/25°C) | | | | |
|---|---|---|---|---|
| Example 1 | Example 2 | | Comparative Example 1 | Comparative Example 2 |
| | A | B | | |
| 9.2 | 10.3 | 6 | 9.1 | 25 |
| | | | | |

| Example 3 A | Example 4 | | Comparative Example 3 | Comparative Example 4 |
|---|---|---|---|---|
| | A | B | | |
| 8.8 | 9.9 | 5.6 | 8.7 | 24.6 |
| | | | | |

| Example 5 | Example 6 | | Comparative Example 5 | Comparative Example 6 |
|---|---|---|---|---|
| | A | B | | |
| 8.5 | 10.6 | 5.3 | 8.4 | 24.3 |
| | | | | |

| Example 7 | Example 8 | | Comparative Example 7 | Comparative Example 8 |
|---|---|---|---|---|
| | A | B | | |
| 9.2 | 10.3 | 6 | 9.1 | 25 |

### [Storage Stability Evaluation]

For the respective ink compositions of Examples 1 and 2 and Comparative Examples 1 and 2 described above, the initial viscosity (25°C) and the viscosity after standing for 7 days under an environment of 60°C were measured to perform evaluation of storage stability. The results thereof are shown in Table 6.
Indices of Storage Stability Evaluation
A: The rate of change between the initial viscosity and the viscosity after standing is less than ±50.
B: The rate of change between the initial viscosity and the viscosity after standing is from ±50% to less than ±100%.
C: The rate of change between the initial viscosity and the viscosity after standing is ±100% or more.

**[Table 6]**

| Storage Stability Evaluation | | | | | |
|---|---|---|---|---|---|
| | Example 1 | Example 2 | | Compara. Example 1 | Compara. Example 2 |
| | | A | B | | |
| Judgment | A | A | A | A | C |

### [Curability Test (on Glass Substrate)]

The respective ink compositions of Examples 1 and 2 and Comparative Examples 1 and 2 described above were dropped onto a glass substrate, and treated with UV light having a wavelength of 365 nm under curing conditions of an irradiation intensity of 17 mW/cm², an irradiation time of 6 seconds and an accumulated amount of light of 102 mJ/cm². Then, the following visual evaluation of curability was performed. The results thereof are show in Table 7.

### Indices of Curability Evaluation

A: Completely cured.
B: A surface is partially uncured.

**[Table 7]**

| Curability Evaluation (on Glass Substrate) | | | | | |
|---|---|---|---|---|---|
| | Example 1 | Example 2 | | Compara. Example 1 | Compara. Example 2 |
| | | A | B | | |
| Surface State | A | A | | B | A |
| | | | | | |

| | Example 3 | Example 4 | | Compara. Example 3 | Compara. Example 4 |
|---|---|---|---|---|---|
| | | A | B | | |
| Surface State | A | A | | B | A |
| | | | | | |

| | Example 5 | Example 6 | | Compara. Example 5 | Compara. Example 6 |
|---|---|---|---|---|---|
| | | A | B | | |
| Surface State | A | A | | B | A |
| | | | | | |

| | Example 7 | Example 8 | | Compara. Example 7 | Compara. Example 8 |
|---|---|---|---|---|---|
| | | A | B | | |
| Surface State | A | A | | B | A |

### [Curability Test (Use of Ink Jet Printer)]

Utilizing an ink jet printer, PX-G900, manufactured by Seiko Epson Corporation, each of the ink compositions of Examples 1 to 8 and Comparative Examples 1 to 8 described above was filled in a corresponding color line, and subjected to solid pattern printing at normal temperature and normal pressure. An OHP film of A4 size (manufactured by Fuji Xerox Co., Ltd., Xerox Film <no frame>) was used as a recording medium. Then, printing and curing treatment were performed by means of an UV irradiation light source installed at a paper-discharge port under such curing conditions as to provide an accumulated amount of light of 200 mJ/cm² at 365 nm. Then, curability thereof was evaluated by the following indices. The results thereof are shown in Table 8.

### Indices of Curability Evaluation

A: Completely cured.
B: A surface is partially uncured.
C: Printing is impossible.

**[Table 8]**

| Curability Evaluation (Use of Ink Jet Printer) | | | | | |
|---|---|---|---|---|---|
| | Example 1 | Example 2 | | Compara. Example 1 | Compara. Example 2 |
| | | A | B | | |
| Surface State | A | A | | B | C |
| | | | | | |

| | Example 3 | Example 4 | | Compara. Example 3 | Compara. Example 4 |
|---|---|---|---|---|---|
| | | A | B | | |
| Surface State | A | A | | B | C |
| | | | | | |

| | Example 5 | Example 6 | | Compara. Example 5 | Compara. Example 6 |
|---|---|---|---|---|---|
| | | A | B | | |
| Surface State | | A | | B | C |
| | | | | | |

| | Example 7 | Example 8 | | Compara. Example 7 | Compara. Example 8 |
|---|---|---|---|---|---|
| | | A | B | | |
| Surface State | A | A | | B | C |

From Table 8, the ink compositions of Examples 1 to 8 are low in viscosity compared to the ink compositions of Comparative Examples 2, 4, 6 and 8 containing no allyl group-containing compound and no N-vinyl compound, and comprehensively viewing Tables 6 to 8, it is apparent that the ink compositions of Examples are also excellent in both of storage stability and curability, compared to the ink compositions of Comparative Examples,

### [Examples 9-1 to 9-4]

Ink compositions shown in Tables 9 to 12 were prepared. The respective ratios of the ink compositions are parts by weight. Table 9 shows black (Example 9-1), and Bk-1 to Bk-7 in Table 9 are test samples. Table 10 shows cyan (Example 9-2), and samples are named C-1 to C-7. Table 11 shows magenta (Example 9-3), and samples are named M-1 to M-7. Table 12 shows yellow (Example 9-4), and samples are named Y-1 to Y-7.
In the ink compositions of Examples 9-1 to 9-4 shown in Tables 9 to 12, "allyl glycol" was used as the allyl group-containing compound (polymerizable compound), and "N-vinylformamide and N-vinylcaprolactam" were used as the N-vinyl compound (polymerizable compound). Further, "Darocur ITX and Kayacure DETX-s" were used as thioxanthone (polymerization accelerator), and "Darcur EHA" was used as the amine (polymerization accelerator).

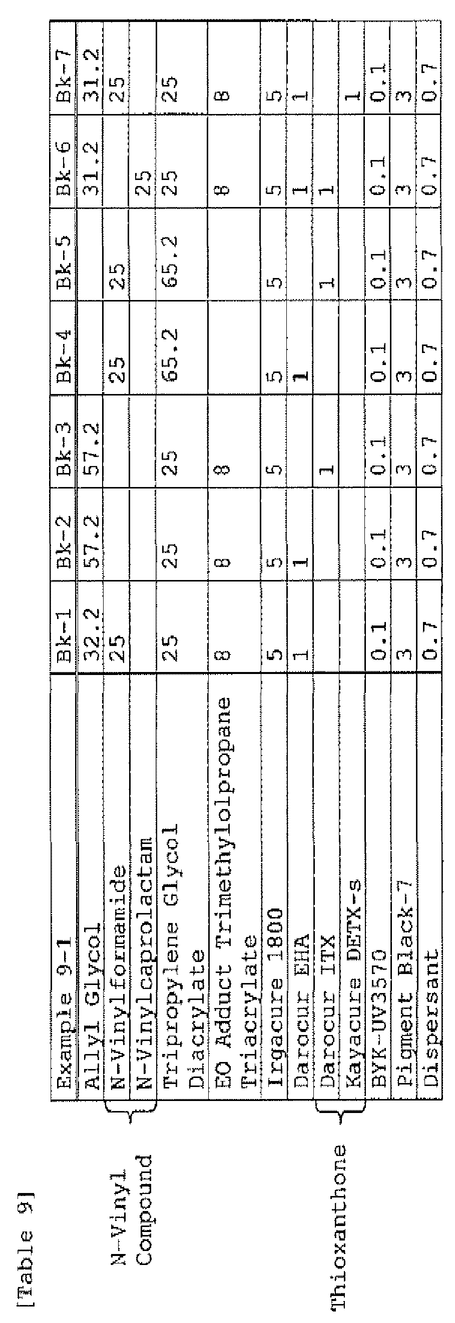

**[Table 10]**

| Example 9-2 | C-1 | C-2 | C-3 | C-4 | C-5 | C-6 | C-7 |
|---|---|---|---|---|---|---|---|
| Allyl Glycol | 32.2 | 57.2 | 57.2 | | | 31.2 | 31.2 |
| N-Vinylformamide | 25 | | | 25 | 25 | | 25 |
| N-Vinylcaprolactam | | | | | | 25 | |
| Tripropylene Glycol Diacrylate | 25 | 25 | 25 | 65.2 | 65.2 | 25 | 25 |
| EO Adduct Trimethylolpropane Triacrylate | 8 | 8 | 8 | | | 8 | 8 |
| Irgacure 1800 | 5 | 5 | 5 | 5 | 5 | 5 | 5 |
| Darocur EHA | 1 | 1 | | 1 | | 1 | 1 |
| Darocur ITX | | | 1 | | 1 | 1 | |
| Kayacure DETX-s | | | | | | | 1 |
| BYK-UV3570 | 0.1 | 0.1 | 0.1 | 0.1 | 0.1 | 0.1 | 0.1 |
| Pigment Blue-15:3 | 3 | 3 | 3 | 3 | 3 | 3 | 3 |
| Dispersant | 0.7 | 0.7 | 0.7 | 0.7 | 0.7 | 0.7 | 0.7 |

**[Table 11]**

| Example 9-3 | M-1 | M-2 | M-3 | M-4 | M-5 | M-6 | M-7 |
|---|---|---|---|---|---|---|---|
| Allyl Glycol | 32 | 57 | 57 | | | 31 | 31 |
| N-Vinylformamide | 25 | | | 25 | 25 | | 25 |
| N-Vinylcaprolactam | | | | | | 25 | |
| Tripropylene Glycol Diacrylate | 25 | 25 | 25 | 65 | 65 | 25 | 25 |
| EO Adduct Trimethylolpropane Triacrylate | 8 | 8 | 8 | | | 8 | 8 |
| Irgacure 1800 | 5 | 5 | 5 | 5 | 5 | 5 | 5 |
| Darocur EHA | 1 | 1 | | 1 | | 1 | 1 |
| Darocur ITX | | | 1 | | 1 | 1 | |
| Kayacure DETX-s | | | | | | | 1 |
| BYK-UV3570 | 0.1 | 0.1 | 0.1 | 0.1 | 0.1 | 0.1 | 0.1 |
| Pigment Violet-19 | 3 | 3 | 3 | 3 | 3 | 3 | 3 |
| Dispersant | 0.9 | 0.9 | 0.9 | 0.9 | 0.9 | 0.9 | 0.9 |

**[Table 12]**

| Example 9-4 | Y-1 | Y-2 | Y-3 | Y-4 | Y-5 | Y-6 | Y-7 |
|---|---|---|---|---|---|---|---|
| Allyl Glycol | 32.3 | 57.3 | 57.3 | | | 31.3 | 31.3 |
| N-Vinylformamide | 25 | | | 25 | 25 | | 25 |
| N-Vinylcaprolactam | | | | | | 25 | |
| Tripropylene Glycol Diacrylate | 25 | 25 | 25 | 65.3 | 65.3 | 25 | 25 |
| EO Adduct Trimethylolpropane Triacrylate | 8 | 8 | 8 | | | 8 | 8 |
| Irgacure 1800 | 5 | 5 | 5 | 5 | 5 | 5 | 5 |
| Darocur EHA | 1 | 1 | | 1 | | 1 | 1 |
| Darocur ITX | | | 1 | | 1 | 1 | |
| Kayacure DETX-s | | | | | | | 1 |
| BYK-UV3570 | 0.1 | 0.1 | 0.1 | 0.1 | 0.1 | 0.1 | 0.1 |
| Pigment Yellow-155 | 3 | 3 | 3 | 3 | 3 | 3 | 3 |
| Dispersant | 0.6 | 0.6 | 0.6 | 0.6 | 0.6 | 0.6 | 0.6 |

### [Viscosity Evaluation]

For the respective ink compositions of Examples 9-1 to 9-4 shown in the above-mentioned Tables 9 to 12, the initial viscosity at 25°C was measured in the same manner as in Example 1 described above, and the results thereof are shown in Table 13.

**[Table 13]**

| Initial Viscosity Measurement | | | | | | | |
|---|---|---|---|---|---|---|---|
| Example 9-1 | Bk-1 | Bk-2 | Bk-3 | Bk-4 | Bk-5 | Bk-6 | B-7 |
| Initial Viscosity (mPa·s/25°C) | 9.2 | 10.5 | 10.5 | 13.5 | 13.5 | 9.7 | 9.2 |
| | | | | | | | |

| Example 9-2 | C-1 | C-2 | C-3 | C-4 | C-5 | C-6 | C-7 |
|---|---|---|---|---|---|---|---|
| Initial Viscosity (mPa·s/25°C) | 8.8 | 10.1 | 10.1 | 13.1 | 13.1 | 9.3 | 8.8 |
| | | | | | | | |

| Example 9-3 | N-1 | M-2 | M-3 | M-4 | M-5 | M-6 | M-7 |
|---|---|---|---|---|---|---|---|
| Initial Viscosity (mPa·s/25°C) | 8.5 | 10.8 | 10.8 | 13.8 | 13.8 | 9 | 8.5 |
| | | | | | | | |

| Example 9-4 | Y-1 | Y-2 | Y-3 | Y-4 | Y-5 | Y-6 | Y-7 |
|---|---|---|---|---|---|---|---|
| Initial Viscosity (mPa·s/25°C) | 9.2 | 10.5 | 10.5 | 13.5 | 13.5 | 9.7 | 9.2 |

### [Storage Stability Evaluation]

For the respective ink compositions of Table 9 (Example 9-1: Bk-1 to Bk-7) described above, the initial viscosity (25°C) and the viscosity after standing for 7 days under an environment of 60°C were measured to perform evaluation of storage stability. The results thereof are shown in Table 14.

### Indices of Storage Stability Evaluation

A: The rate of change between the initial viscosity and the viscosity after standing is less than ±50.
B: The rate of change between the initial viscosity and the viscosity after standing is from ±50% to less than ±100%.
C: The rate of change between the initial viscosity and the viscosity after standing is ±100% or more.

**[Table 14]**

| Storage Stability Evaluation | | | | | | | |
|---|---|---|---|---|---|---|---|
| Example 9-1 | Bk-1 | Bk-2 | Bk-3 | Bk-4 | Bk-5 | Bk-6 | Bk-7 |
| Judgment | A | A | A | A | A | A | A |

### [Curability Test (on Glass Substrate)]

The respective ink compositions of Examples 9-1 to 9-4 shown in Tables 9 to 12 described above were dropped onto a glass substrate, and treated with UV light having a wavelength of 365 nm under curing conditions of an irradiation intensity of 17 mW/cm², an irradiation time of 6 seconds and an accumulated amount of light of 102 mJ/cm². Then, the following visual evaluation of curability was performed. The results thereof are show in Table 15.

### Indices of Curability Evaluation

A: Completely cured.
B: A surface is partially uncured.

**[Table 15]**

| Curability Evaluation (on Glass Substrate) | | | | | | | |
|---|---|---|---|---|---|---|---|
| Example 9-1 | Bk-1 | Bk-2 | Bk-3 | Bk-4 | Bk-5 | Bk-6 | Bk-7 |
| Surface State | A | A | A | A | A | A | A |
| | | | | | | | |

| Example 9-2 | C-1 | C-2 | C-3 | C-4 | C-5 | C-6 | C-7 |
|---|---|---|---|---|---|---|---|
| Surface State | A | A | A | A | A | A | A |
| | | | | | | | |

| Example 9-3 | M-1 | M-2 | M-3 | M-4 | M-5 | M-6 | M-7 |
|---|---|---|---|---|---|---|---|
| Surface State | A | A | A | A | A | A | A |
| | | | | | | | |

| Example 9-3 | Y-1 | Y-2 | Y-3 | Y-4 | Y-5 | Y-6 | Y-7 |
|---|---|---|---|---|---|---|---|
| Surface State | A | A | A | A | A | A | A |

### [Curability Test (Using Ink Jet Printer)]

Utilizing an ink jet printer, PX-G900, manufactured by Seiko Epson Corporation, each of the ink compositions of Examples 9-1 to 9-4 shown in Tables 9 to 12 described above was filled in a corresponding color line, and subjected to solid pattern printing at normal temperature and normal pressure. An OHP film of A4 size (manufactured by Fuji Xerox Co., Ltd., Xerox Film <no frame>) was used as a recording medium. Then, printing and curing treatment were performed by means of an UV irradiation light source installed at a paper-discharge port under such curing conditions as to provide an accumulated amount of light of 200 mJ/cm² at 365 nm. Then, curability thereof was evaluated by the following indices. The results thereof are shown in Table 16.

### Indices of Curability Evaluation

A: Completely cured.
B: A surface is partially uncured.
C: Printing is impossible.

**[Table 16]**

| Curability Evaluation (Using Ink Jet Printer) | | | | | | | |
|---|---|---|---|---|---|---|---|
| Example 9-1 | Bk-1 | Bk-2 | Bk-3 | Bk-4 | Bk-5 | Bk-6 | Bk-7 |
| Surface State | A | A | A | A | A | A | A |
| | | | | | | | |

| Example 9-2 | C-1 | C-2 | C-3 | C-4 | C-5 | C-6 | C-7 |
|---|---|---|---|---|---|---|---|
| Surface State | A | A | A | A | A | A | A |
| | | | | | | | |

| Example 9-3 | M-1 | M-2 | M-3 | M-4 | M-5 | M-6 | M-7 |
|---|---|---|---|---|---|---|---|
| Surface State | A | A | A | A | A | A | A |
| | | | | | | | |

| Example 9-3 | Y-1 | Y-2 | Y-3 | Y-4 | Y-5 | Y-6 | Y-7 |
|---|---|---|---|---|---|---|---|
| Surface State | A | A | A | A | A | A | A |

As described above, it is apparent that the respective ink compositions of Examples 9-1 to 9-4 are "low in viscosity" in view of Table 13, and also excellent in both of "storage stability and curability" in view of Tables 14 to 16.

### [Examples 10-1 to 10-6 and Comparative Examples 9-1 and 9-2]

Photocurable ink compositions shown in Table 17 were prepared. The respective ratios of the ink compositions are parts by weight. In the ink compositions shown in Table 17, "allyl glycol" was used as the allyl group-containing compound (polymerizable compound), and "N-vinylformamide was used as the N-vinyl compound (polymerizable compound). Further, "Darocur EHA was used as the amine (polymerization accelerator).

**[Table 17]**

| | |
|---|---|
| N-Vinylformamide | 25 |
| Allyl Glycol | 32.2 |
| Tripropylene Glycol Diacrylate | 25 |
| Trimethylolpropane EQ Adduct Triacrylate | 8 |
| Irgacure 819 | 4 |
| Irgacure 369 | 1 |
| Darocur EHA | 1 |
| BYK-UV3570 | 0.1 |
| Pigment Black-7 | 3 |
| Dispersant (polyoxyalkylenepolyalkylenepolyamine) | 0.7 |

### [Evaluation of Upper Limit of Time until Irradiation]

The UV curable ink compositions shown in Table 17 described above were dropped onto a glass substrate, and treated with UV light having a wavelength of 365 nm under curing conditions of an irradiation intensity of 17 mW/cm², an irradiation time of 10 seconds and an accumulated amount of light of 170 mJ/cm², at time intervals of 3 seconds (Example 10-1), 5 seconds (Example 10-2), 10 seconds (Example 10-3), 20 seconds (Example 10-4) and 30 seconds (Comparative Example 9-1), respectively, until irradiation. Then, a surface state was visually confirmed and evaluated by the following indices. The results thereof are shown in Table 18.

### Indices for Visually Confirming and Evaluating Surface state

A1: Completely cured.
B1: A surface is partially uncured (practical level).
C1: A surface and the inside are partially uncured.

**[Table 18]**

| Time until Irradiation (s) | | |
|---|---|---|
| 3 | A₁ | Example 10-1 |
| 5 | A₁ | Example 10-2 |
| 10 | B₁ | Example 10-3 |
| 20 | B₁ | Example 10-4 |
| 30 | C₁ | Comparative Example 10-1 |

### [Evaluation of Lower Limit of Time until Irradiation]

Utilizing an ink jet printer, PX-G900, manufactured by Seiko Epson Corporation, solid pattern printing was performed at normal temperature and normal pressure using the UV curable ink composition shown in Table 17 described above and a PC sheet (manufactured by Teijin Chemicals Ltd., Panlite Sheet) . Further, apparatuses which can change the time from ink ejection to irradiation by the distance from a recording head, with UV light having a wavelength of 365 nm at an irradiation intensity of 17 mW/cm², were installed on either side of the recording head. The distance of an UV irradiation apparatus from the recording head was changed to conduct treatment at time intervals of 0.05 second (Comparative Example 9-2), 0.1 second (Example 10-5) and 0.5 second (Example 10-6), respectively, until irradiation, under curing conditions of an irradiation time of 10 seconds and an accumulated amount of light of 170 mJ/cm². Then, a surface state was visually confirmed and evaluated by the following indices. The results thereof are shown in Table 19.

### Indices for Visually Confirming and Evaluating Surface State

A2: Cured with uniformly forming solid image.
B2: Cured with streaks slightly generated in solid image (practical level).
C2; Cured with streaks generated in solid image.

**[Table 19]**

| Time until Irradiation (s) | | |
|---|---|---|
| 0.05 | C₂ | Comparative Example 9-2 |
| 0.1 | B₂ | Example 10-5 |
| 0.5 | A₂ | Example 10-6 |

As apparent form Tables 18 and 19, when light irradiation was initiated 0.1 to 20 s after ejection of the ink composition shown in Table 17 from the head onto the recording medium (see Examples 10-1 to 10-6), the ink could be cured, and high image quality images in which steaks were not generated in solid image were obtained, compared to the cases outside this range (see Comparative Examples 9-1 and 9-2).

## Claims

1. A photocurable ink composition comprising at least one of an allyl group-containing compound and an N-vinyl compound as a polymerizable compound and at least one of thioxanthone and an amine as a polymerization accelerator.

2. The photocurable ink composition according to claim 1, wherein the allyl group-containing compound is allyl glycol.

3. The photocurable ink composition according to claim 1, wherein the N-vinyl compound is N-vinylformamide.

4. The photocurable ink composition according to any one of claims 1 to 3, wherein the amine is an aminobenzoate.

5. The photocurable ink composition according to any one of claims 1 to 4, wherein the at least one of an allyl group-containing compound and an N-vinyl compound is contained in the ink composition in an amount of 20 to 80% by weight.

6. The photocurable ink composition according to any one of claims 1 to 5, which comprises a photopolymerization initiator and a coloring material.

7. The photocurable ink composition according to any one of claims 1 to 6, wherein the photocurable ink composition is a two-liquid type ink composition.

8. The photocurable ink composition according to any one of claims 1 to 7, wherein the photocuring of the photocurable ink composition is UV curing;

9. An ink jet recording method using the photocurable ink composition according to any one of claims 1 to 8, which comprises initiating light irradiation 0.1 to 20 s after ejection of the photocurable ink composition from a head onto a recording medium.

10. The ink jet recording method according to claim 9, wherein the photocurable ink composition is a two-liquid type ink composition, and the two-liquid type ink composition is mixed before ejection from the head.

11. The ink jet recording method according to claim 9, wherein the photocurable ink composition is a two-liquid type ink composition, and the two-liquid type ink composition is mixed on the recording medium.

12. The ink jet recording method according to any one of claims 9 to 11, wherein the photocuring of the photocurable ink composition is UV curing, and a light emitting diode or a laser diode is used as a light source for the light irradiation.

13. An ink jet recording apparatus using the photocurable ink composition according to any one of claims 1 to 8, which has a mechanism of initiating light irradiation 0.1 to 20 s after ejection of the photocurable ink composition from a head onto a recording medium.
